# EUROPEAN PATENT APPLICATION

(11) **EP 2 139 160 A1**
(43) Date of publication of application: **30.12.2009**
(21) Application number: 08715256.7
(22) Date of filing: 18.03.2008
(51) Int. Cl.: H04L 12/24

(54) **METHOD AND DEVICE FOR CONTROLLING MAIN-BACKUP INVERSION**

(30) Priority: 13.04.2007 CN 200710027536
(71) Applicant: Huawei Technologies Co., Ltd., Longgang District, Shenzhen Guangdong 518129 (CN)
(72) Inventor: LIU, Wei, Shenzhen Guangdong 518129 (CN); OU, Sisi, Shenzhen Guangdong 518129 (CN); LEI, Zhangwei, Shenzhen Guangdong 518129 (CN); CHEN, Xiaotie, Shenzhen Guangdong 518129 (CN)
(74) Representative: Pfenning, Meinig & Partner GbR
(86) International application number: PCT/CN2008/070520
(87) International publication number: WO 2008/125041

(57) **Abstract**

A method for active/standby switchover control includes: respectively outputting indication signals indicative of a frame alignment position of active service data and standby service data of a same service according to a predetermined output manner of the indication signals; then respectively buffering active service data frames, standby service data frames and the corresponding indication signals, and reporting information of the alignment position when buffers the active service data and the standby service data at the alignment position indicated by the indication signals; finally switching the active service data and the standby service data according to the alignment position of the active service data and the standby service data indicated by the indication signals. A corresponding apparatus is also disclosed.

## Description

### CROSS REFERENCE

The present application claims the benefit and priority of CN 200710027536.2, filed on April 13, 2007 and entitled "METHOD AND APPARATUS OF ACTIVE/STANDBY SWITCHOVER CONTROL", which is incorporated herewith by reference.

### FIELD OF THE INVENTION

The present invention relates to communication field, more particularly, to a method and apparatus for active/standby switchover control.

### BACKGROUND

In a communication system, the active/standby switchover technique is widely applied to various communication devices, such as stored program control switches, Ethernet switches, routers etc., and to processing of service and control message communications between internal nodes in various control systems.

Nowadays, in a synchronous digital communication system such as a Synchronous Digital Hierarchy (SDH) / a Synchronous Optical Network (SONET), when performing active/standby switchover, an active board and a standby board send same input data to an active/standby switchover device respectively. The active/standby switchover device buffers the input data from frame header, and a system clock reads from two buffers simultaneously at predetermined times. The data outputted by the two buffers is the same, so that a switch between two services may be implemented at any position.

In the active/standby switchover process of the above synchronous digital communication system, uniform system frame header and system clock in the synchronous digital communication system are utilized. The system frame header may read out two buffers simultaneously at a predetermined time. Because of the existence of the system clock, the clock does not need to be switched, so that a lossless switchover can be implemented with less difficulty. However, in an asynchronous communication system, such as an Optical Transport Network (OTN), if an active/standby switchover technique, which is similar to the technique utilized by a synchronous communication system such as SDH is utilized, the difficulty in implementation of active/standby switchover is increased because an asynchronous communication system does not have a system clock nor a system frame header.

### SUMMARY

Various embodiments of the present invention provide a method and apparatus for active/standby switchover control, thereby decreasing the difficulty of implementation of active/standby switchover in an asynchronous communication system, and implementing lossless switchover of active/standby services in an asynchronous communication system.

One embodiment of the present invention provides a method for active/standby switchover control. The method includes: outputting respectively, indication signals indicative of a frame alignment position of active service data frames and standby service data frames according to a predetermined output manner of the indication signals, wherein the active service data frames and the standby service data frames belong to a same service; buffering respectively, active service data frames, standby service data frames and the corresponding indication signals, and reporting information of the alignment position when buffers the active service data and the standby service data at the alignment position indicated by the indication signals; and switching the active service data and the standby service data according to the alignment position of the active service data and the standby service data indicated by the indication signals.

Accordingly, one embodiment of the present invention provides an apparatus for active/standby switchover control.

The apparatus includes: a data frame processing unit, configured to respectively output indication signals indicative of a frame alignment position of active service data and standby service data of a same service according to a predetermined output manner of the indication signals; an active buffer processing unit, configured to buffer active service data frames and a corresponding indication signal, and report information of the alignment position when reads or writes the active service data at the alignment position indicated by the indication signals; a standby buffer processing unit, configured to buffer standby service data frames and a corresponding indication signal, and report information of the alignment position when reads or writes the standby service data at the alignment position indicated by the indication signals; and a switchover control unit, configured to switch the active service data and the standby service data according to the alignment position of the active service data and the standby service data indicated by the indication signals.

According to the various embodiments of the present invention, active and standby service data has indication signals indicative of an alignment position, an asynchronous communication system may report information of the alignment position according to the indication signals when buffers the active and standby service data, so that the alignment position of the active and standby service data may be determined, difficulty of implementation of active/standby switchover in an asynchronous communication system is lowered, and lossless switchover of active/standby services is implemented.

### BRIEF DESCRIPTION OF THE DRAWINGS

Fig 1 illustrates a flowchart of an active/standby switchover method according to an embodiment of the present invention;

Fig 2 illustrates a schematic diagram of relationships between indication signals and data frames according to an embodiment of the present invention;

Fig 3 illustrates a flowchart of controlling active/standby service data switchover according to an embodiment of the present invention;

Fig 4 illustrates a schematic diagram of an active/standby switchover apparatus according to an embodiment of the present invention;

Fig 5 illustrates another schematic diagram of an active/standby switchover apparatus according to an embodiment of the present invention;

Fig 6 illustrates a schematic diagram of an active/standby switchover apparatus under a Relay mode according to an embodiment of the present invention;

Fig 7 illustrates a phase-lock clock source switchover circuit according to an embodiment of the present invention; and

Fig 8 illustrates a time sequence diagram of a phase-lock clock source switchover circuit according to an embodiment of the present invention.

### DETAILED DESCRIPTION

Some embodiments of the present invention are described in detail below in conjunction with accompanying drawings.

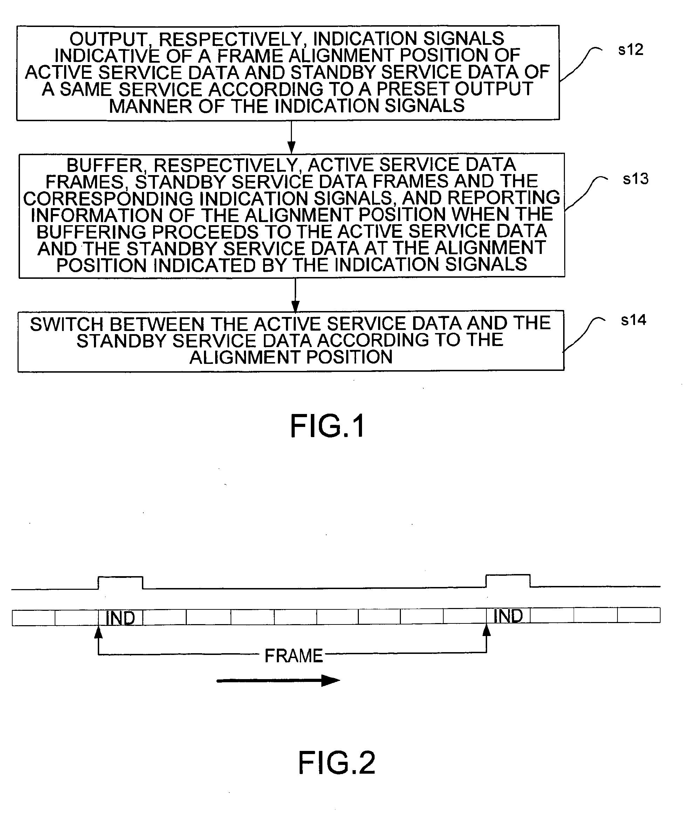

Referring to Fig. 1, Fig. 1 is a schematic diagram of a first embodiment of the present invention, illustrating a flowchart of an active/standby switchover method according to an embodiment. The method mainly includes steps as follows.
Step s12: Indication signals indicative of a frame alignment position of active service data and standby service data of a same service are respectively output according to a predetermined output manner of the indication signals.
Step s13: Active service data frames, standby service data frames and the corresponding indication signals are respectively buffered; and information of the alignment position are reported when the buffering operation proceeds to the active service data and the standby service data at the alignment position indicated by the indication signals.
Step s14: The switching between the active service data and the standby service data is controlled according to the alignment position of the active service data and the standby service data indicated by the indication signals.

It should be noted that, embodiments of the present invention introduce indication signals indicative of an alignment position of an active service data frame and a standby service data frame. Structure of the indication signals is substantially the same as the structure of the frames. The difference is that the indication signals use "0" and "1" to represent validity of different positions in the frame. For example, when the frame header is set to be the alignment position, a position which corresponds to the frame header in the indication signal is set to "1", and other positions are set to "0", and vice versa. As shown in Fig. 2, relationship between indication signals and data frames is illustrated where the frame header is the alignment position. However, it should be noted that the alignment positions according to embodiments of the present invention are not limited to the position shown in Fig. 2. In Fig. 2, "Frame" represents a complete frame and "Ind" represents the alignment position of the indication signals. It can be seen that the indication signals are at high levels at positions corresponding to "Ind", and are at low levels at other positions.

Output manner of the indication signals in embodiments of the present invention is associated with transport delay in network planning. If time difference between a path delay of a standby service and a path delay of an active service is less than the transport time of half a frame, an indication signal may be outputted for each data frame. If time difference between a path delay of a standby service and a path delay of an active service is lager than transport time of half a frame, an indication signal may be outputted for a plurality of data frames.

The following descriptions take Multi Frame Alignment Signal (MFAS) of OTN as an example, but are not limited in this respect.

A multi frame indication byte of MFAS is circulated between 0-255. If time difference between a path delay of a standby service and a path delay of an active service is less than transport time of half a frame, an indication signal is outputted for each data frame. If time difference between a path delay of a standby service and a path delay of an active service is lager than transport time of half a frame but not more than transport time of 256/2 data frames, an indication signal may be outputted for every N data frames based on the actual delay and the number of bytes of the multi frames. For example, if time difference between a path delay of a standby service and a path delay of an active service is lager than transport time of half a frame but less than transport time of one data frame, N may be set to 2, that is, an indication signal may be outputted for every 2 data frames. If time difference between a path delay of a standby service and a path delay of an active service is lager than transport time of 256/2 bytes, reserve fields in the frames may be utilized to extend the range of delay. For example, for a transport delay larger than 256/2 bytes, an extension of 8 bits may be achieved by utilizing the reserve fields in the frames, than the maxim tolerance delay is extended to 65536/2 bytes. Therefore, if the delay is transport time of 256/2 data frames, but is less that transport time of 258/2 data frames, N is set to 258, that is, an indication signal may be outputted for every 258 data frames.

Furthermore, the indication signal of an active service data is the same as the indication signal of a standby service data. That is, if a value of a position corresponding to the frame header is "1" in the indication signal of the active service data, the value of a position corresponding to the frame header is also "1" in the indication signal of the standby service data.

In addition, the frame alignment position, which is the valid position indicated by the indication signal may be set based on actual requirements. For example, the frame alignment position may be set at frame header, multi frame, or any position within the frame structure.

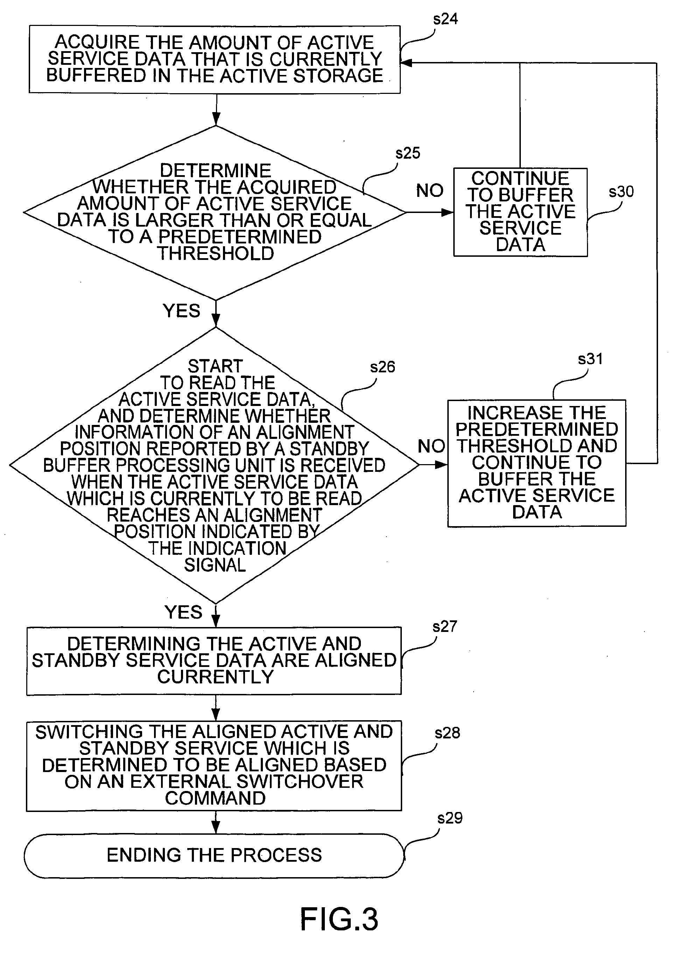

Referring to Fig. 3, Fig. 3 is a schematic diagram of a second embodiment of the present invention, illustrating a detailed process for implementing step 14 in the first embodiment. The process includes steps as follows:
Step s24: The amount of active service data that is currently buffered is acquired. In an actual application, the amount of active service data may be reported by an active buffer processing unit by real time;
Step s25: It is determined whether the acquired amount of active service data is larger than or equal to a predetermined threshold; if larger than or equal to a predetermined threshold, step 26 is performed; otherwise, step s30 is performed.
Step s26: It is started to read the active service data, and It is determined determining whether information of an alignment position is reported by a standby buffer processing unit when the active service data which is currently read reaches an alignment position indicated by the indication signal; if so, step s27 is performed; otherwise, step s30 is performed.
Step s27: It is determined that the active and standby service data are aligned currently.
Step s28: The aligned active and standby service which is determined to be aligned is switched based on an external switchover command.
Step s29: The process ends.
Step s30: The buffering of the active service data continues, and the process returns to step s24.
Step s31: The predetermined threshold is increased and the buffering of the active service data continues, and then the process returns to step s24.

It should be noted that, in Relay mode, when switching between the aligned active and standby service which is determined to be aligned based on an external switchover command in step 28, associated clocks of the active service data and the standby service data are also switched over. And after switching between associated clocks of the active service data and the standby service data, frequency division configuration of the clocks are adjusted according to a gap between the associated clocks of the active service data and the standby service data, so that burrs may be avoided when switching between associated clocks of the two paths of service data in Relay mode.

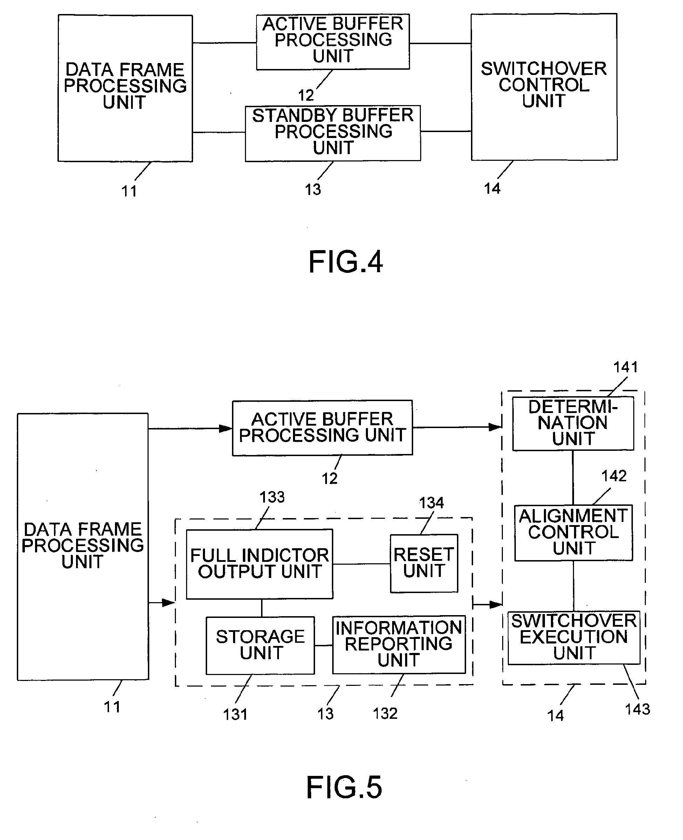

Referring to Fig. 4, a schematic diagram of a third embodiment of the present invention, the structure of an active/standby switchover apparatus according to an embodiment of the present invention is illustrated. The active/standby switchover apparatus mainly includes: a data frame processing unit 11, an active buffer processing unit 12, a standby buffer processing unit 13 and a switchover control unit 14.

In an actual implementation, the data frame processing unit 11 performs frame alignment respectively on active service data and standby service data of a same service, which reach the data frame processing unit 11 with different path delays, and respectively outputs indication signals indicative of a frame alignment position of an active service data frame and a standby service data frame according to the active service data frame and the standby service data frame. Then, the active buffer processing unit 12 buffers the active service data frame and the corresponding indication signals, and reports information of the alignment position when reading or writing the active service data at the alignment position indicated by the indication signals. The standby buffer processing unit 13 buffers the standby service data frame and the corresponding indication signals, and reports information of the alignment position when reading or writing the standby service data at the alignment position indicated by the indication signals. Finally, the switchover control unit 14 switches between the active service data and the standby service data according to reported information of the alignment position.

It should be noted that, embodiments of the present invention introduce indication signals indicative of an alignment position of an active service data frame and a standby service data frame. Structure of the indication signals is substantially the same as the structure of the frames, the difference is that the indication signals use "0" and "1" to represent validity of different positions in the frame.

Furthermore, the indication signal of an active service data is the same as the indication signal of a standby service data. That is, if a value of a position corresponding to the frame header is "1" in the indication signal of the active service data, the value of a position corresponding to the frame header is also "1" in the indication signal of the standby service data, and vice versa.

In addition, the frame alignment position, which is the valid position indicated by the indication signal may be set based on actual requirements. For example, the frame alignment position may be set at frame header, multi frame, or any position within the frame structure. The following descriptions further describe the embodiments of the present invention by way of an example where the frame header is the alignment position. Specifically, the active buffer processing unit 12 and the standby buffer processing unit 13 use a First In First Out (FIFO) buffer processing unit. The active buffer processing unit 12 is called active FIFO, accordingly, the standby buffer processing unit 13 is called standby FIFO.

Referring to Fig. 5, a schematic diagram of a fourth embodiment of the present invention, a detailed implementation of an active/standbv switchover apparatus according to an embodiment is illustrated. The active FIFO 12 and the standby FIFO 13 are described first, read enablement of the active FIFO 12 and the standby FIFO 13 are controlled by the switchover control unit 14. When no switchover is performed, the switchover control unit 14 always reads data from the active FIFO 12, while the standby FIFO 13 is disabled by the switchover control unit 14.

Functions of the active FIFO 12 and the standby FIFO are the same. The following description take the standby FIFO 13 as an example, the standby FIFO 13 includes: a storage unit 131, an information reporting unit 132, a full indictor output unit 133 and a reset unit 134.

In a detailed implementation, the storage unit 131 stores standby service data frames and corresponding indication signals from the data frame processing unit 11. The information reporting unit 132 reports information of an alignment position of the standby service data to the switchover control unit 14 when the storage unit 131 proceeds to store the standby service data at the alignment position indicated by the indication signal.

When the switchover control unit 14 reads data from the active FIFO 12, read enablement of the standby FIFO 13 is disabled by the switchover control unit 14. When the amount of the standby service data stored by the standby FIFO 13 reaches a predetermined full indicator threshold, that is, the buffer is full, the full indictor output unit 133 outputs a full indicator. The reset unit 134 clears the stored standby service data and reset pointer for reading/writing data, that is, pointers for reading/writing data toward zero. The standby FIFO 13 switches to Null status until a next frame comes, when the next frame comes, the standby FIFO 13 buffers data again.

The switchover control unit 14 of an embodiment of the present invention includes: a determination unit 141, an alignment control unit 142 and a switchover execution unit 143.

In a detailed implementation, the determination unit 141 determines whether the amount of active service data buffered by the active FIFO 12 is larger than or equal to a predetermined threshold; if so, the determination unit 141 instructs the alignment control unit 142 to process; otherwise, the determination unit 141 still disables read enablement of the active FIFO 12.

During the processing by the alignment control unit 142, the alignment control unit 142 enables the read enablement of the active FIFO 12 and reads the buffered active service data from the FIFO 12. If a frame header is an alignment position indicated by the indication signal, then it is determined whether information of an alignment position of the standby service data is received before a frame header of the active service data is read; if so, the alignment control unit 142 determines the active and standby service data are aligned currently. If the frame header is the alignment position, the alignment control unit 142 indicates the switchover execution unit 143 to switch the aligned active and standby service which is determined to be aligned based on an external switchover command, when the frame header of the standby service data frame is at "0" address of the standby FIFO 13, that is, the alignment control unit 14 disables the read enablement of the active FIFO 12, enables the read enablement of the standby FIFO 13 and reads the buffered standby service data from the standby FIFO 13. Otherwise, if no information of an alignment position of the standby service data is received, the alignment control unit 142 increases the predetermined threshold.

It should be noted that, when the determination unit 141 determines that the amount of active service data buffered by the active FIFO 12 is larger than or equal to a predetermined threshold, the alignment control unit 142 enables the read enablement of the active FIFO 12 and reads the buffered active service data from the FIFO 12. That is, if water-line value of the active FIFO 12 is larger than or equal to a low water-line set by the switchover control unit 14, data is read. Then the active FIFO 12 is always at a range near a predetermined low water-line. A reading clock (Clk_switch) may be from a working clock of a subsequent function unit, or may be an externally provided clock. The subsequent function unit may be a mapping function unit or a de-mapping function unit, etc.. When selecting width of data bits according to rate of Clk_switch, the general principle is that a reading rate shall be higher than a writing rate, that is Clk_switch frequency × width of data bits for reading (FIFO_dout) > writing clock (Clk_in) frequency ×width of data bits for writing (FIFO_din).

And, the amount of buffer of the active FIFO 12 and the standby FIFO 13 in embodiments of the present invention may be configured according to a service delay in an actual application. However, if it is not sensitive to resource occupancy of a design, the amount of buffer of the active FIFO 12 and the standby FIFO 13 may be designed to be larger than 2 times of a maxim service delay. Thus, when the active FIFO 12 reaches it half buffer amount, the frame header of the standby FIFO 13 is stored at its "0" address, then circuits of water-line adjustment for the FIFO may be omitted.

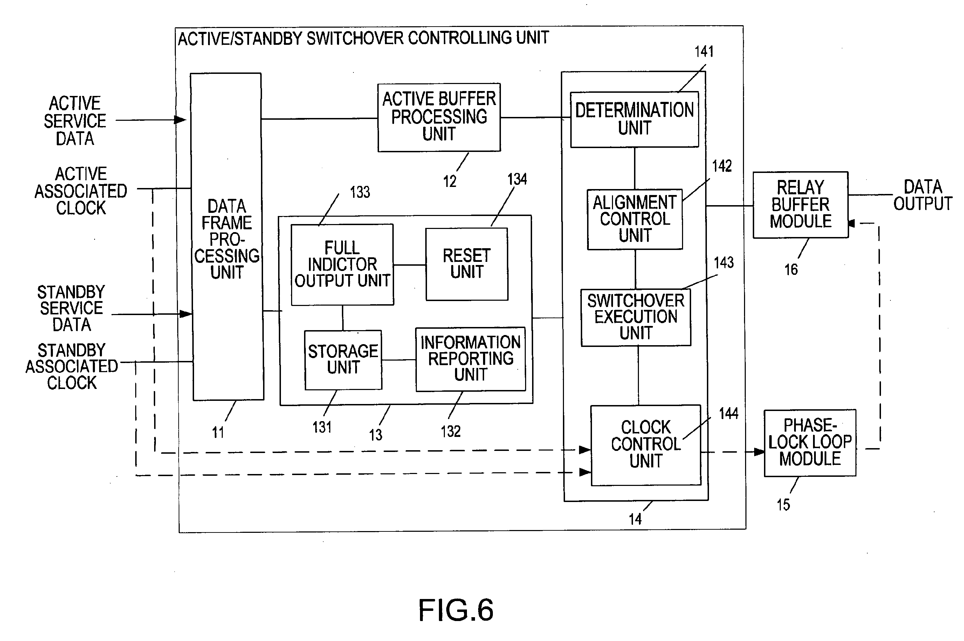

Furthermore, in Relay mode, when performing active/standby service switchover, the clock shall also be switched and provided to a phase-lock loop module so as to avoid relay FIFO abnormal due to occurrence of burrs. Embodiments of the present invention provide a fifth embodiment, as shown in Fig 6, which is applied in Relay mode.

The difference between the fifth embodiment and the fourth embodiment is, the switchover control unit 14 in this embodiment further includes:
a clock control unit 144, configured to generate a phase-lock clock source according to associated clocks of the current active and standby service data, and output the phase-lock clock source to a phase-lock loop module 15. The phase-lock loop module 15 generates a relay clock based on the phase-lock clock source and outputs the relay clock to a relay buffer module 16. The clock control unit 144 is further configured to switch associated clocks of the active service data and the standby service data when receiving an external switchover command, and after switching associated clocks of the active service data and the standby service data, adjust frequency division configuration of the clocks according to a gap between the associated clocks of the active service data and the standby service data. A process of frequency division configuration adjustment is described below in conjunction with a phase-lock clock source switchover circuit.

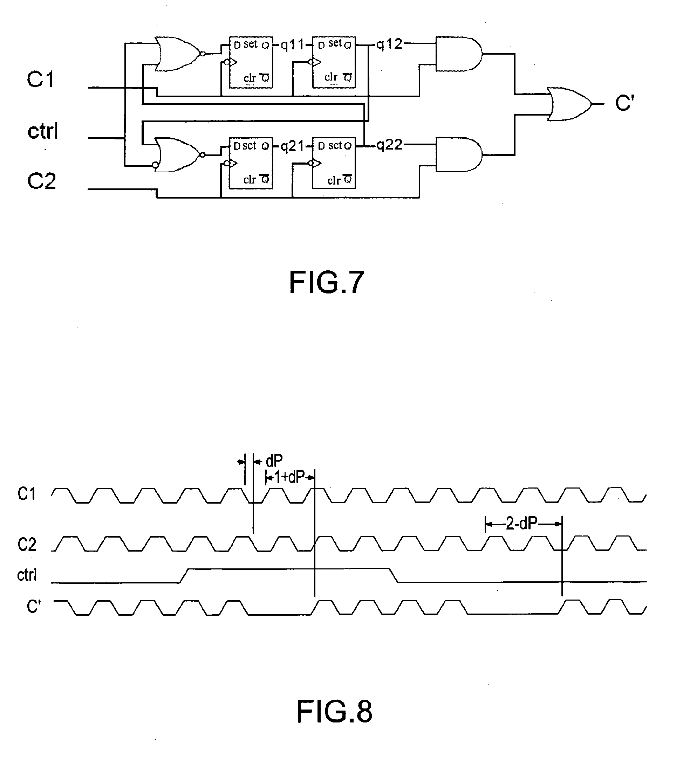

In an actual application, the phase-lock clock source switchover circuit in the clock control unit 144 may be a circuit shown in Fig 7, where "Ctrl" represents a switchover control signal, "C1" represents an associated clock of the active service data, "C2" represents an associated clock of the standby service data, "C'" represents an associated clock after switchover, "q11/q12/q21/q22" represent outputs of registers in the circuit. A detailed working process of the circuit is prior art and will not be described herewith. A time sequence diagram of the circuit is shown in Fig 8, it is assumed that both clocks are ideal clock sources without jitter or drift, only a fixed difference of phases (dP) exists between the two clock sources. It can be analyzed that a gap generated during a switchover from C1 to C2 is 1+dP, and a gap generated during a switchover back from C2 to C1 is 2-dP, a total gap regarding the two switchovers is 3 clock periods. Frequency division configuration of the clocks are adjusted during the switchovers according to the gaps of the clocks, for example, compensating 3 clock gaps every 2 switchovers, so that a water-line fluctuation of a subsequent relay buffer module 16 is avoided. However, because the relationship between the phases of the two clocks is variable during service transmission, a complete compensation is not able to be realized. It is still possible that the water-line of the relay buffer module 16 may fluctuate. A level of adjustment of the frequency division configuration may be enhanced or attenuated based on status of the water-line of the relay buffer module 16, so that abnormal of the relay buffer module may be avoided.

In the embodiment, the clock control unit 144 processes the outputted clock, so as to attenuate an impact to subsequent function units due to jitter of the clock during switchover, such as an impact to the relay buffer module 16.

It should be noted that, in an active/standby apparatus shown by respective embodiments mentioned above, the data frame processing unit 11 performs frame freeze for active service data and standby service data of a same service, which reach the data frame processing unit 11 with different path delays, and respectively outputs indication signals indicative of a frame alignment position of an active service data frame and a standby service data frame according to the active service data frame and the standby service data frame. In an actual application, different data frame processing units may be used to process and output the active service data and standby service data respectively, that is, the active service data and standby service data have their own data frame processing units.

In embodiments of the method and apparatus according to the present invention, active service data and standby service data is written into buffers by respective associated clocks. When performing an active/standby switchover, a reading clock which reads the active service data and the standby service data from the buffers is the same clock as a working clock used by a switchover control unit, so that active/standby switchover of an asynchronous system is implemented.

Embodiments of the present invention may implement a lossless switchover of active and standby service data in an asynchronous system when both the active service and the standby service are in normal condition. In Relay mode, embodiments of the present invention perform corresponding processes for outputted clocks, so as to attenuate an impact to subsequent function units due to jitter of the clock during switchover. Furthermore, embodiments of the present invention implement a selective receipt of services sent by an active/standby cross board by using an OTN system with 1+1 hot backup. Embodiments of the present invention may be applied to line 1+1 protection of important services.

The foregoing are merely exemplary embodiments of the present invention, which are not intended to limit the present invention. Any modifications and variations can be made to the present invention by those skilled in the art. Any modifications, equivalents, improvements made within the principle of the present invention shall be construed as falling within the scope of the present invention.

## Claims

1. A method for active/standby switchover control, **characterized in** comprising:
outputting respectively, indication signals indicative of a frame alignment position of active service data frames and standby service data frames according to a preset manner of the indication signals, wherein the active service data frames and the standby service data frames belong to a same service;
buffering respectively, active service data frames, standby service data frames and the corresponding indication signals, and reporting information of the alignment position when the buffering proceeds to the active service data and the standby service data at the alignment position indicated by the indication signals; and
switching between the active service data and the standby service data according to the alignment position of the active service data and the standby service data indicated by the indication signals.

2. The method of claim 1, **characterized in** further comprising:
presetting the output manner of the indication signals for the active and standby service data of the same service according to path delay in network planning.

3. The method of claim 1, **characterized in that**, switching between the active service data and the standby service data according to the alignment position of the active service data and the standby service data indicated by the indication signals comprises:
acquiring the amount of active service data that is currently buffered; and
switching, when it is determined that the amount of active service data is larger than or equal to a predetermined threshold and the active and standby service data are aligned currently, between the aligned active and standby service based on an external switchover command.

4. The method of claim 3, **characterized in that**, determining that the active and standby service data are aligned currently comprises:
reading the active service data;
determining whether information of the alignment position of the standby service data is received when the active service data which is currently to be read reaches an alignment position indicated by the indication signal; and
determining that the active and standby service data are aligned currently if information of an alignment position of the standby service data is received; or increasing the predetermined threshold until information of an alignment position of the standby service data is received when the active service data which is currently to be read reaches an alignment position indicated by the indication signal, if information of an alignment position of the standby service data is not received.

5. The method of claim 3, **characterized in** further comprising:
in Relay mode,
switching between associated clocks of the active service data and the standby service data according to the external switchover command; and
compensating a gap generated during switchover of the associated clocks of the active service data and the standby service data by adjusting frequency division configuration of the clocks.

6. An apparatus for active/standby switchover control, **characterized in** comprising:
a data frame processing unit, configured to respectively output indication signals indicative of a frame alignment position of active service data and standby service data of a same service according to a preset output manner of the indication signals;
an active buffer processing unit, configured to buffer active service data frames and a corresponding indication signal, and report information of the alignment position when reading or writing the active service data at the alignment position indicated by the indication signals;
a standby buffer processing unit, configured to buffer standby service data frames and a corresponding indication signal, and report information of the alignment position when reading or writing the standby service data at the alignment position indicated by the indication signals; and
a switchover control unit, configured to switch between the active service data and the standby service data according to the alignment position of the active service data and the standby service data indicated by the indication signals.

7. The apparatus of claim 6, **characterized in that**, the switchover control unit comprises:
a determination unit, configured to determine whether the amount of active service data buffered by the active buffer processing unit is larger than or equal to a predetermined threshold;
an alignment control unit, configured to read the buffered active service data after the determination unit determines that the amount of active service data buffered by the active buffer processing unit is larger than or equal to the predetermined threshold, and determine whether information of the alignment position reported by the standby buffer processing unit is received when the active service data which is currently to be read reaches an alignment position indicated by the indication signal, if the information of the alignment position is received, determine that the active and standby service data are aligned currently, if the information of the alignment position is not received, increase the predetermined threshold; and
a switchover execution unit, configured to switch between the aligned active and standby service which are determined to be aligned currently, based on an external switchover command, when the alignment control unit determines that the active and standby service data are aligned currently.

8. The apparatus of claim 7, **characterized in that**, the switchover control unit further comprises:
a clock control unit, configure to switch, in Relay mode, between associated clocks of the active service data and the standby service data according to an external switchover command, and compensate a gap generated during switchover of the associated clocks of the active service data and the standby service data by adjusting frequency division configuration of the clocks.

9. The apparatus of any one of claims 6-8, **characterized in that**, each of the active buffer processing unit and the standby buffer processing unit comprises:
a storage unit, configured to store service data frames and corresponding indication signals; and
an information reporting unit, configured to report information of an alignment position when the storage unit proceeds to store the service data at the alignment position indicated by the indication signal.

10. The apparatus of claim 9, **characterized in that**, each of the active buffer processing unit and the standby buffer processing unit further comprises:
a full indictor output unit, configure to output a full indicator when the amount of stored service data reaches a predetermined full indicator threshold; and
a reset unit, configured to clear the stored service data and reset pointer for reading/writing data when the full indictor output unit outputs the full indicator.
